# EUROPEAN PATENT APPLICATION

(11) **EP 4 538 965 A1**
(43) Date of publication of application: **16.04.2025**
(21) Application number: 23819229.8
(22) Date of filing: 08.06.2023
(51) Int. Cl.: G06T 7/00

(54) **LOOP CLOSURE DETECTION METHOD AND APPARATUS, AND ELECTRONIC DEVICE AND MEDIUM**

(30) Priority: 08.06.2022 CN 202210643280
(71) Applicant: Shining 3D Tech Co., Ltd., Hangzhou, Zhejiang 311258 (CN)
(72) Inventor: ZHAO, Bintao, Hangzhou, Zhejiang 311258 (CN); LIN, Zhongwei, Hangzhou, Zhejiang 311258 (CN); ZHANG, Jian, Hangzhou, Zhejiang 311258 (CN); JIANG, Tengfei, Hangzhou, Zhejiang 311258 (CN)
(74) Representative: Zaboliene, Reda
(86) International application number: PCT/CN2023/099220
(87) International publication number: WO 2023/237065

(57) **Abstract**

**The** disclosed embodiments relate to a loop detection method, an apparatus, an electronic device and a medium, where the method includes: obtaining a frame image set of a scanned object; each of frame images in the frame image set has a plurality of scanned marking points; generating an initial frame of the scanned object according to the frame image set; obtaining a candidate frame point set of each initial frame point in the initial frame based on the coordinate position information of each initial frame point in the initial frame; identifying a target frame point in the candidate frame point set of each initial frame point that meets a preset loop detection condition, establishing a link relationship between each initial frame point and a corresponding target frame point, performing a global optimization processing on the marking points of the initial frame based on the link relationship between the initial frame point and the corresponding target frame point, and obtaining a first target frame. The above technical solution can improve the accuracy and reliability of loop detection, thereby making the model generated by the final three-dimensional reconstruction more accurate and reliable.

## Description

The present disclosure claims a priority to a Chinese patent application filed with the China National Intellectual Property Administration on June 8, 2022, with an application number 202210643280.2 and entitled "LOOP DETECTION METHOD, APPARATUS, ELECTRONIC DEVICE AND MEDIUM", entire contents of which are incorporated by reference in the present disclosure.

### TECHNICAL FIELD

The present disclosure relates to a field of scanning technology, and in particular to a loop detection method, an apparatus, an electronic device and a medium.

### BACKGROUND

At present, the scanning technology is constantly developing, and marking points are the most effective means to assist stitching images. Misaligned marking points caused by cumulative errors, a radius search is usually used to detect loops.

However, when scanning a large scene (such as a 20-square-meter room, a car, etc.), there may be a large cumulative error in the marking points, and there may be a serious misalignment during looping, which makes a cross-section of a model generated by a final 3D reconstruction look spiral, or different marking points may be easily marked as same marking points, resulting in erroneous results in the model generated by the final 3D reconstruction.

### SUMMARY

### (I). Technical issues to be resolved

The technical problem to be solved by the present disclosure is to solve the problem that the existing model generated by a three-dimensional reconstruction is erroneous due to the accumulated errors of the marking points.

### (II) Technical solution

In order to solve the above technical problems, the present disclosure provides a loop detection method, an apparatus, an electronic device and a medium.

The present disclosure provides a loop detection method, the method comprising:
Acquiring a frame image set of a scanned object; each of frame images in the frame image set having a plurality of scanned marking points, and each of the plurality of scanned marking points corresponding to one marking point of the scanned object;
Generating an initial frame of the scanned object according to the frame image set; wherein the initial frame comprises a plurality of initial frame points, each of the plurality of initial frame points is determined based on the plurality of scanned marking points, and each initial frame point corresponds to one scanned marking point in the frame images;
Acquiring a candidate frame point set for each initial frame point in the initial frame based on coordinate position information of each initial frame point;
Identifying a target frame point that meets a preset loop detection condition in the candidate frame point set of each initial frame point, and establishing a link relationship between each initial frame point and a corresponding target frame point; and
Obtaining a first target frame by performing a global optimization processing on the marking points of the initial frame based on the link relationship between the initial frame point and the corresponding target frame point.

The present disclosure also provides a loop detection apparatus, the apparatus comprising:
A first acquisition module, being configured to acquiring a frame image set of a scanned object; each of frame images in the frame image set having a plurality of scanned marking points, and each of the plurality of scanned marking points corresponding to one marking point of the scanned object;
A generating module, being configured to generate an initial frame of the scanned object according to the frame image set; wherein the initial frame comprises a plurality of initial frame points, each of the plurality of initial frame points is determined based on the plurality of scanned marking points, and each initial frame point corresponds to one scanned marking point in the frame images;
A second acquisition module, being configured to acquire a candidate frame point set for each initial frame point in the initial frame based on coordinate position information of each initial frame point;
An identification module, being configured to identify a target frame point that meets a preset loop detection condition in the candidate frame point set of each initial frame point;
A link establishment module, being configured to establish a link relationship between each initial frame point and a corresponding target frame point; and
A processing module, being configured to obtain a first target frame by performing a global optimization processing on the marking points of the initial frame based on the link relationship between the initial frame point and the corresponding target frame point.

An embodiment of the present disclosure also provides an electronic device, comprising: a processor; a storage device for storing instructions executable by the processor; the processor is configured to read the instructions from the storage device and execute the instructions to implement the loop detection method provided in the embodiment of the present disclosure.

The embodiment of the present disclosure further provides a computer-readable storage medium, wherein the storage medium stores a computer program, and the computer program is used to execute the loop detection method provided by the embodiment of the present disclosure.

### (III) Beneficial effects

The technical solution provided by the embodiment of the present disclosure has the following advantages compared with the prior art:
The loop detection method provided by the embodiment of the present disclosure includes acquiring a frame image set of a scanned object; each frame image in the frame image set having a plurality of scanned marking points, and each of the plurality of scanned marking points corresponding to one marking point of the scanned object; generating an initial frame of the scanned object according to the frame image set; wherein the initial frame comprises a plurality of initial frame points, each of the plurality of initial frame points is determined based on the plurality of scanned marking points, and each initial frame point corresponds to one scanned marking point in a plurality of frame images; acquiring a candidate frame point set for each initial frame point in the initial frame based on coordinate position information of each initial frame point; identifying a target frame point that meets a preset loop detection condition in the candidate frame point set of each initial frame point, and establishing a link relationship between each initial frame point and a corresponding target frame point; and obtaining a first target frame by performing a global optimization processing on the marking points of the initial frame based on the link relationship between the initial frame point and the corresponding target frame point. The above technical solution can process a loop detection in any scanning scene, ensure a loop detection effect, improve an accuracy and a reliability of the loop detection, and further improve a detection efficiency and an effect under the loop detection, so that the model generated by a final three-dimensional reconstruction is more accurate and reliable.

It is to be understood that the foregoing general description and the following detailed description are exemplary and explanatory only and are not restrictive of the present disclosure.

### BRIEF DESCRIPTION OF THE DRAWINGS

Accompanying drawings herein are incorporated into and constitute a part of the specification, illustrate embodiments consistent with the present disclosure, and are used to explain the principles of the present disclosure together with the specification. Throughout the accompanying drawings, same or similar reference numerals represent same or similar elements. It should be understood that the drawings are schematic, and originals and elements are not necessarily drawn to scale.

In order to more clearly illustrate the embodiments of the present invention or technical solutions in the prior art, the drawings required for use in the embodiments or the description of the prior art will be briefly introduced below. Obviously, for ordinary skilled in the art, other drawings can be obtained based on these drawings without paying any creative labor.
FIG. 1 is a schematic diagram of a flow chart of a loop detection method provided by an embodiment of the present disclosure;
FIG. 2 is a schematic diagram of a flow chart of another loop detection method provided by an embodiment of the present disclosure;
FIG. 3 is a schematic diagram of a structure of a loop detection apparatus provided by an embodiment of the present disclosure;
FIG. 4 is a schematic diagram of a structure of an electronic device provided by an embodiment of the present disclosure.

### DETAILED DESCRIPTION

In order to make the purposes, technical solutions and advantages of the embodiments of the present disclosure clearer, the technical solutions in the embodiments of the present disclosure will be clearly and completely described below. Obviously, the described embodiments are part of the embodiments of the present disclosure, and are not all of the embodiments. Based on the embodiments of the present disclosure, all other embodiments obtained by the ordinary skilled in the art without creative work are within a protecting scope of the present disclosure.

In actual applications, when scanning a large scene (such as a 20-square-meter room, a car, etc.), there may be a large cumulative error in marking points, and there may be a serious misalignment during a loop.

For example, when scanning a very large cylinder, a model with a circular cross section can be obtained theoretically after one rotation. However, due to a cumulative error, a final model cross section is not a circle. A starting point and an end point, which should have been a same point, become two points at a certain distance, and the cross section of the model looks spiral.

It is also understandable that some marking points each may be considered as two or more marking points due to accumulated errors. A distance between marking points that should be the same point is large, exceeding a distance threshold of an existing loop detection scheme, that is, there is a large mismatch.

For the above problems, the present disclosure provides a loop detection method, which obtains a frame image set of a scanned object, each of frame images in the frame image set having multiple scanned marking points, and one scanned marking point corresponding to one marking point of the scanned object; generates an initial frame of the scanned object according to the frame image set, where the initial frame includes multiple initial frame points, each of the initial frame points is determined based on the multiple scanned marking points, and one initial frame point corresponds to one scanned marking point in multiple frame images; obtains a candidate frame point set of each initial frame point in the initial frame based on coordinate position information of each initial frame point; identifies a target frame point that meet a preset loop detection condition in the candidate frame point set of each initial frame point; and establishes a link relationship between each initial frame point and the corresponding target frame point; obtains a first target frame by globally optimizing marking points of the initial frame based on the link relationship between each initial frame point and the corresponding target frame point.

As a result, it is possible to handle loop detection in any scanning scenario and ensure a loop detection effect, improve an accuracy and a reliability of the loop detection, and make a model generated by the subsequent 3D reconstruction based on a loop detection result obtained by this solution more accurate and reliable, meeting scanning requirements of various scenarios and further improving a user experience.

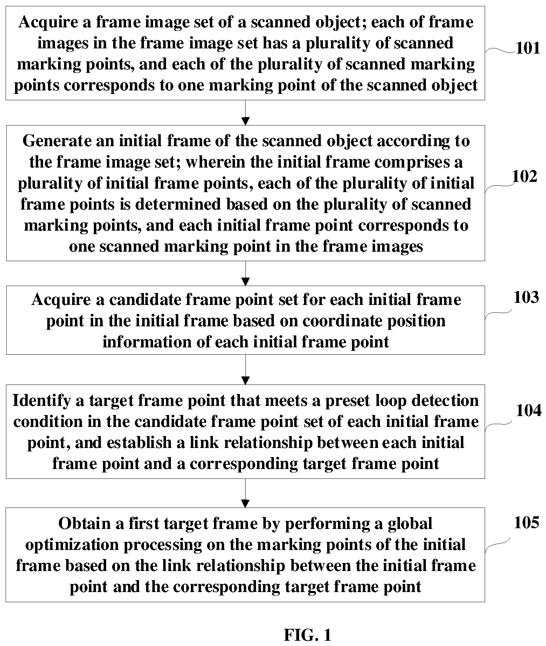

Specifically, FIG. 1 is a flow chart of a loop detection method provided by an embodiment of the present disclosure, and the method can be performed by a loop detection apparatus, where the loop detection apparatus can be implemented by a software and/or a hardware and can generally be integrated in an electronic device. As shown in FIG. 1, the method includes following steps:
Step 101, a frame image set of a scanned object is obtained; each of frame images in the frame image set has a plurality of scanned marking points, and each scanned marking point corresponds to one marking point of the scanned object.
Step 102, an initial frame of the scanned object is generated based on the frame image set; where the initial frame includes a plurality of initial frame points, each initial frame point is determined based on the plurality of scanned marking points, and each initial frame point corresponds to one scanned marking point in the frame images.

The frame image set refers to a plurality of frame images obtained when scanning the scanned object, where the scanned object is selected and set according to an application scenario, for example, the multiple frames of images are obtained by scanning a car with a monocular camera, or the plurality of frame images are obtained by scanning a room with a binocular camera.

Where the scanned object has a plurality of marking points that are actually existed, and the marking points may be stickers pasted on the scanned object or features of the scanned object itself.

Each frame image refers to a frame image of the scanned object obtained by scanning at a certain moment, including multiple scanned marking points obtained based on marking points that are actually existed and a camera posture when scanning to obtain the frame image (such as a position, an orientation and an upward direction of a camera). Each scanned marking point corresponds to one marking point of the scanned object.

The initial frame includes the plurality of initial frame points, each of which is determined based on the plurality of scanned marking points, and each initial frame point corresponds to one scanned marking point in the plurality of frame images. It can be understood that each initial frame point is used to represent one marking point that actually exists of the scanned object. Since a certain marking point that actually exists of the scanned object may be captured by multiple frame images, then one initial frame point corresponds to a scanned marking point in the multiple frame images.

In the embodiment of the present disclosure, there are many ways to generate the initial frame of the scanned object based on the frame image set.

In one embodiment, a reference frame that is empty is obtained, a first frame image is obtained from the frame image set, frame points are determined based on all scanned marking points in the first frame image and are added to the reference frame, a second frame image is obtained from the frame image set in sequence, a frame point to be processed that matches a scanned marking point of the second frame image is obtained from the reference frame; and determining whether the scanned marking point of the second frame image and the frame point to be processed that is matched are the same marking point based on feature information of the scanned marking point. That is, it is determined whether the two represent the same marking point of the scanned object.

When the scanned marking point of the second frame image and the frame point to be processed that is matched are the same marking point, it means that the frame point to be processed that is matched corresponds to the scanned marking point of the second frame image, and feature information of the frame point to be processed needs to be updated, that is, feature information such as a normal angle and a marking point radius of the scanned marking points of the second frame image needs to be added to the feature information of the frame point to be processed.

And when the scanned marking point of the second frame image and the frame point to be processed that is matched are not the same marking point, a frame point needs to be newly added, and a frame point is determined based on the scanned marking point of the second frame image, and is added to the reference frame.

The initial frame is obtained by determining each frame of the frame image set.

In another embodiment, the reference frame that is empty is obtained, all scanned marking points corresponding to the frame image set are directly obtained, and then frame points are determined by performing a deduplication processing based on position coordinate information of the all scanned marking points, and are added to the reference frame to obtain the initial frame.

Among them, each scanned marking point has corresponding coordinate position information, and the coordinate position information refers to a position coordinate value of the scanned marking point in a world coordinate system. An image coordinate value of each scanned marking point in each frame image is extracted in advance, and the position coordinate information of each scanned marking point in each frame image is obtained based on the image coordinate value of each scanned marking point and a camera memory matrix.

Specifically, after acquiring the frame image set by scanning the scanned object, the initial frame of the scanned object is generated based on the frame image set.

Step 103, based on coordinate position information of each initial frame point, a candidate frame point set of each initial frame point in the initial frame is obtained.

Among them, the coordinate position information of the initial frame point can uniquely identify a position of the initial frame point. In the embodiments of the present disclosure, based on the coordinate position information of each initial frame point, there are many ways to obtain the candidate frame point set for each initial frame point in the initial frame. In some embodiments, a position coordinate value of each initial frame point is determined based on coordinate position information of each initial frame point, and a candidate position range is determined based on the position coordinate value and a preset radius distance, and frame points within the candidate position range are obtained as the candidate frame point set for each initial frame point.

In other embodiments, the position coordinate value of each initial frame point is obtained based on the coordinate position information of each initial frame point, a position distance between two initial frame points is calculated based on the position coordinate value of each initial frame point, and the candidate frame point set of each initial frame point is determined based on the position distance and the distance threshold. The above two methods are only examples of obtaining the candidate frame point set of each initial frame point in the initial frame based on the coordinate position information of each initial frame point, and the present disclosure does not limit the method of obtaining the candidate frame point set of each initial frame point in the initial frame based on the coordinate position information of each initial frame point.

Furthermore, based on coordinate position information of each initial frame point, the candidate frame point set of each initial frame point in the initial frame is obtained.

Step 104, a target frame point that meets a preset loop detection condition in the candidate frame point set of each initial frame point is identified, and a link relationship between each initial frame point and the corresponding target frame point is established.

Among them, the loop detection condition such as preset connectivity features, a feature matching are pre-set, and those settings are determined according to the application scenario.

In the embodiments of the present disclosure, there are many ways to identify the target frame point that meets the preset loop detection condition in the candidate frame point set of each initial frame point. In some implementations, whether each initial frame point and the candidate frame points in the candidate frame point set belong to the same frame image is determined. When each initial frame point and the candidate frame points do not belong to the same frame image, whether feature information of each initial frame point and feature information of the candidate frame points matches. When the feature information of each initial frame point and the feature information of the candidate frame point matches, the candidate frame point is determined to be the target frame point.

It should be noted that if it is determined that the initial frame point and the candidate frame point belong to the same frame image, it means that the initial frame point and the candidate frame point cannot be the same marking point, and there is no need to proceed to a next determination step; or when the feature information of the initial frame point does not match the feature information of the candidate frame point, it means that the initial frame point and the candidate frame point are not the same marking point, and there is no need to establish a link relationship.

In other implementations, it is directly determined whether feature information of each initial frame point matches feature information of the candidate frame point in the candidate frame point set, and when feature information of each initial frame point matches feature information of the candidate frame point, the candidate frame point is determined to be a target frame point.

The link relationship indicates that two frame points may be the same marking point, that is, each initial frame point and the corresponding target frame point may represent the same marking point on the scanned object. In the disclosed embodiment, the link relationship can be stored in an independent data table to record the link relationship between all frame points. One link relationship records an identification of each of two frame points in the initial frame (such as a serial number, which uniquely identifies a marking point).

Furthermore, the target frame point that meets the preset loop detection condition in the candidate frame point set of each initial frame point is identified, and the link relationship between each initial frame point and the corresponding target frame point is established.

Step 105, a first target frame is obtained by performing a global optimization processing on the marking points in the initial frame based on the link relationship between the initial frame point and the corresponding target frame point.

In the embodiment of the present disclosure, after obtaining the initial frame and the link relationship, a global optimization processing for the marking points is required to further improve an accuracy of a loop detection. The first target frame is obtained by performing the global optimization processing on the marking points based on the initial frame and the link relationship.

In the embodiments of the present disclosure, based on the link relationship between the initial frame point and the corresponding target frame point, there are many ways to obtain the first target frame by performing the global optimization processing on the marking points for the initial frame. In some implementations, based on a mapping relationship between the scanned marking point in each frame image and the initial frame point in the initial frame, the coordinate position information and the link relationship of each initial frame point, and a minimum distance between the scanned marking point in each frame image and the initial frame point in the initial frame, and a minimum distance between two initial frame points with the link relationship in the initial frame, an updated position coordinate of the initial frame point is calculated, and a position of the initial frame point is updated based on the updated position coordinate to obtain the first target frame.

In other embodiments, the updated position coordinate of the first target frame point is obtained using a preset calculation formula or algorithm, according to the mapping relationship between the scanned marking point in each frame image and the initial frame point in the initial frame, the coordinate position information and link relationship of each initial frame point, and a preset global target, and finally the position of the initial frame point is updated according to the updated position coordinate of the first target frame point to obtain the first target frame.

Among them, the first target frame includes frame points after the global optimization processing of marking points, that is, the first target frame points contained therein and the link relationship between them are more accurate, so as to determine a loop detection result based on the first target frame, further avoid a problem of wrong layer, and improve the accuracy of loop detection.

In summary, the loop detection method of the embodiment of the present disclosure obtains a frame image set of the scanned object; each frame image in the frame image set has multiple scanned marking points, and each scanned marking point corresponds to one marking point of the scanned object. According to the frame image set, the initial frame of the scanned object is generated; where the initial frame includes multiple initial frame points, each initial frame point is determined based on the multiple scanned marking points, and each initial frame point corresponds to one scanned marking point in the multiple frame images. Based on the coordinate position information of each initial frame point, the candidate frame point set of each initial frame point in the initial frame is obtained, and the target frame point that meets the preset loop detection condition in the candidate frame point set of each initial frame point is identified, and the link relationship between each initial frame point and the corresponding target frame point is established. Based on the link relationship between the initial frame point and the corresponding target frame point, the initial frame is globally optimized for the marking points to obtain the first target frame. The above technical solution can handle the loop detection in any scanning scene, ensure the loop detection effect, improve the accuracy and reliability of the loop detection, and further improve the detection efficiency and effect under the loop detection.

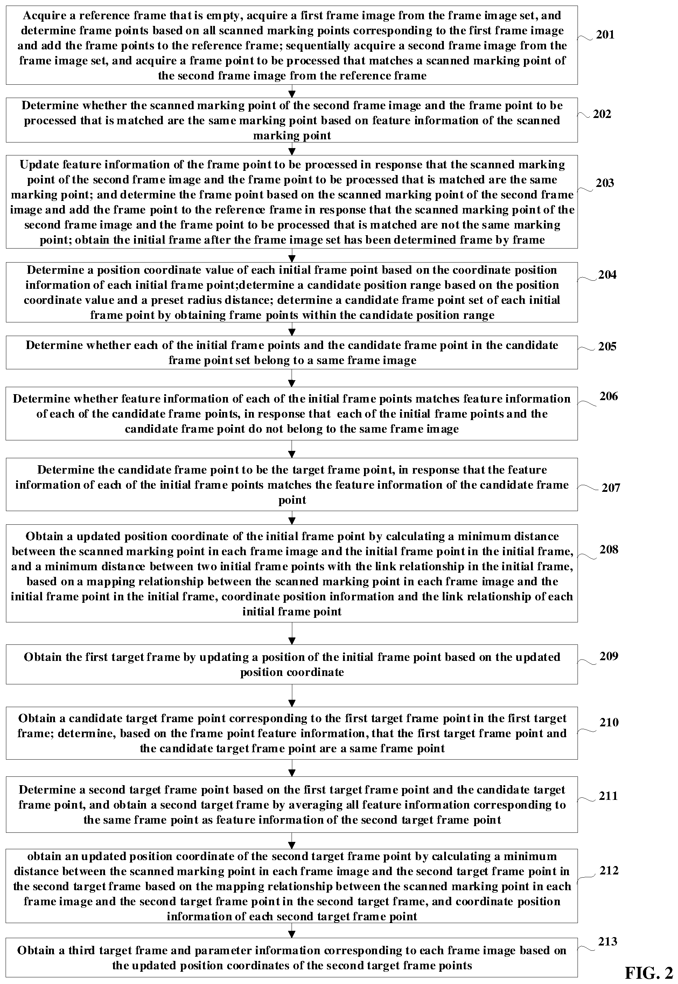

Based on the description of the above embodiment, if the link relationship is wrong, when the loop detection marks different frame points as one frame point, an incorrect result will be obtained. To address the above problem, specifically, FIG. 2 is a flow chart of another loop detection method provided by the embodiment of the present disclosure. Based on the above embodiment, this embodiment further optimizes the above loop detection method. As shown in FIG. 2, the method includes:
Step 201, a reference frame that is empty is obtained, a first frame image is obtained from a frame image set, frame points are determined based on all scanned marking points in the first frame image and are added to the reference frame, a second frame image is obtained from the frame image set in sequence, and a frame point to be processed that matches a scanned marking point corresponding to the second frame image is obtained from the reference frame.
Step 202, whether the scanned marking point of the second frame image and the frame point to be processed that is matched are the same marking point is determined based on the feature information of the scanned marking point.
Step 203, when the scanned marking point of the second frame image and the frame point to be processed that is matched are the same marking point, feature information of the frame point to be processed is updated, and when the scanned marking point of the second frame image and the frame point to be processed that is matched are not the same marking point, a frame point is determined based on the scanned marking point of the second frame image, and is added to the reference frame, and the initial frame is obtained by determining each frame of the frame image set.

Among them, each initial frame point in the initial frame and each scanned marking point in each frame image includes feature information, and the feature information includes but is not limited to: a radius of the marking point, a connectivity, a distance, and direction of the marking point to other marking points , a normal vector of the marking point, etc.

Specifically, the reference frame is initialized to be empty, and the scanned marking points corresponding to each frame image in the frame image set are merged into the reference frame in sequence. More specifically, a reference frame that is empty is given, the frame points are determined according to all the scanned marking points of the first frame image in the frame image set and are added to the reference frame, and for the scanned marking points corresponding to the remaining frame images, frame points to be processed are determined by searching qualified frame points in the reference frame in sequence according to a given radius, and whether the scanned marking point and the frame point to be processed are the same marking point is determined according to the feature information. If so, the feature information of the corresponding frame point to be processed in the reference frame is updated (the normal vector of the scanned marking point is used as the feature information of the frame point to be processed through weighted averaging, and radius information is not updated); if not or no qualified frame point is found, a frame point is determined based on the scanned marking point and is newly added to the reference frame, and the feature information of the scanned marking point is assigned to the newly added frame point in the reference frame, thereby obtaining the initial frame.

Step 204, a position coordinate value of each initial frame point is determined based on coordinate position information of each initial frame point; a candidate position range is determined based on the position coordinate value and a preset radius distance; and a candidate frame point set of each initial frame point is determined by obtaining marking points within the candidate position range.

Step 205, whether each initial frame point and the candidate frame point in the candidate frame point set belong to a same frame image.

Step 206, when each initial frame point and the candidate frame point do not belong to the same frame image, whether the feature information of each initial frame point matches the feature information of the candidate frame point is determined.

Step 207, when the feature information of each initial frame point matches the feature information of the candidate frame point, the candidate frame point is determined as the target frame point.

In the embodiment of the present disclosure, for each initial frame point in the initial frame, other initial frame points (in the initial frame) near the initial frame point are searched with a preset radius as candidate frame points.

Whether the initial frame point and the corresponding candidate frame point are connected is determined. If they are connected, a determination is failed and the determination is terminated. If they are not connected, a further determination is required based on feature information. If the feature information does not match, the determination is failed and the determination is terminated. If the feature information matches, the determination is passed and the link relationship is added.

Among them, a connectivity is not expanded and needs to be determined case by case.

Specifically, when the scanned marking points corresponding to two initial frame points appear in the same frame image at the same time, that is, they are scanned by a certain frame image, then these two initial frame points are not representing the same marking point on the scanned object that is actually existed, but are representing two marking points on the scanned object that are actually existed. At this time, the two initial frame points can be said to be connected, and further confirmation is required through the feature information.

Furthermore, when the scanned marking points corresponding to the two initial frame points do not appear in the same frame image at the same time, the two initial frame points may represent the same marking point on the scanned object that is actually existed, which is equivalent to the same marking point being divided into two frame points. In this case, the two initial frame points can be said to be disconnected. Further confirmation is required through the feature information.

For example: whether the feature information of the initial frame point matches the feature information of the corresponding candidate frame point is determined.

If there is no match, the determination is failed, and the initial frame point and the candidate frame point cannot simultaneously refer to a certain marking point on the scanned object that is actually existed.

If the match is successful, the initial frame point and the candidate frame point may both represent a marking point that is actually existed. At this time, a link relationship is added between the two frame points.

Among them, feature information being matched can be understood as that both frame points have normal, radius, position and the normal, radius and relative position information of surrounding connected points, and whether these feature information can be highly matched through a rigid body transformation. If they are frame points determined by the same scanned marking point, they can be highly matched.

Among them, the link relationship means that the two linked frame points may be determined to be the same marking point, but a probability is not 100%, and there may be wrong links. Constraints are added through links later. After a correct link is optimized, a distance between the two linked frame points will be very small.

Step 208, the updated position coordinate of the initial frame point is obtained by calculating a minimum distance between the scanned marking point in each frame image and the initial frame point in the initial frame, and a minimum distance between two initial frame points with the link relationship in the initial frame, based on a mapping relationship between the scanned marking point in each frame image and the initial frame point in the initial frame, coordinate position information and the link relationship of each initial frame point.

Step 209, a position of the initial frame point is updated based on the updated position coordinate to obtain a first target frame.

Specifically, based on the link relationship between the initial frame point and the corresponding target frame point, the initial frame is globally optimized for the marking points to obtain optimized frame point information, namely, the first target frame.

Specifically, given the mapping relationship between each scanned marking point in the frame image and the initial frame point, the initial position of the initial frame point in the initial frame, and the link relationship within the initial frame, a global energy minimization problem is solved to obtain the optimized frame image posture and the updated position coordinates of the first target frame point. The energy includes: 1) the distance between the points in the frame image and the initial frame that are considered to be the same marking point; 2) the distance between two linked frame points in the initial frame, and the weight of the energy is reduced through a penalty function to prevent incorrect links from obtaining incorrect results.

Among them, each initial frame point in the initial frame is obtained by weighted averaging, that is, any scanned marking point in a single frame image can be mapped to an initial frame point in the initial frame.

Specifically, a series of unknowns and an energy function (the energy function takes these unknowns as input and obtains an energy value, which is a scalar) are given, the input with a smallest result of the energy function can be obtained by solving a relevant mathematical solution or an algorithm calculation. Among them, the unknowns include the posture information corresponding to the frame image set, a position and a normal of the initial frame point in the initial frame. The energy function is input with all single-frame images, the initial frame, the mapping relationship and link relationship between the scanned marking point in all single-frame images and the initial frame point in the initial frame, and obtains a scalar energy. The single-frame image here can adjust its position by changing its posture information.

Step 210, a candidate target frame point corresponding to a first target frame point in the first target frame is obtained, and the first target frame point and the candidate target frame point are determined to be a same frame point based on the feature information of the frame point.

Step 211, a second target frame point is determined based on the first target frame point and the candidate target frame point, and all feature information corresponding to the same frame point is averaged as feature information of the second target frame point to obtain a second target frame.

Specifically, for each first target frame point in the optimized first target frame, other first target frame points near the marking point are searched with a smaller radius. If these first target frame points having the same normal features and same radius features are marked as the same frame point. After updating, the relationship between the frame image and the first target frame is re-updated to obtain the second target frame.

Step 212, an updated position coordinate of the second target frame point is obtained by calculating a minimum distance between the scanned marking point in each frame image and the second target frame point in the second target frame based on the mapping relationship between the scanned marking point in each frame image and the second target frame point in the second target frame, and coordinate position information of each second target frame point.

Step 213, based on the updated position coordinate of the second target frame point, a third target frame and parameter information corresponding to each frame image are obtained.

Specifically, for the updated frame image and the second target frame (without including the link relationship), the global optimization processing of the marking points is re-performed to obtain the optimized frame points and the posture of the frame image.

Specifically, the mapping relationship between each scanned marking point in the frame image and the second target frame point, and the initial position of the second target frame point in the second target frame are given, a minimized global energy is solved to obtain the optimized posture of the frame image and the updated position coordinate of the second target frame point. The energy includes: 1) the frame image and a distance between the points that are considered to be the same marking point in the second target frame.

Specifically, a series of unknowns and an energy function (the energy function takes these unknowns as input and obtains an energy value, which is a scalar) are given, the input with a smallest result of the energy function can be obtained by solving a related mathematical solution or an algorithm calculation. Among them, the unknowns include the posture of the frame image set, the position and normal of the second target frame point in the second target frame. The energy function is input with all single-frame images, the second target frame, the mapping relationship between the scanned marking point in all single-frame images and the second target frame point in the second target frame, and obtains a scalar energy. The single-frame image here can adjust its position by changing its posture.

As a result, the marking point loop detection is stable and reliable, and the global optimization of the marking points is more robust.

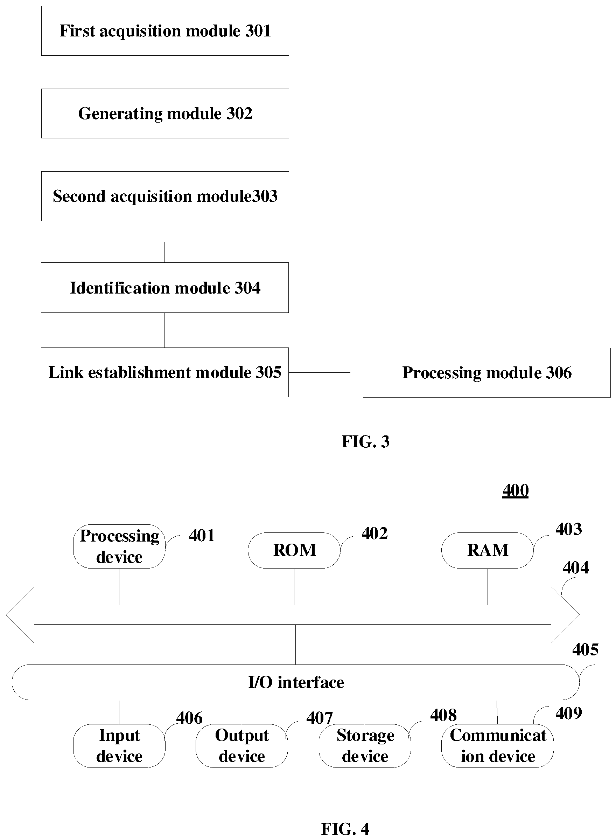

FIG. 3 is a schematic diagram of a structure of a loop detection apparatus provided by an embodiment of the present disclosure. The apparatus can be implemented by software and/or hardware and can generally be integrated in an electronic device. As shown in FIG. 3, the apparatus includes:
A first acquisition module 301 is used to acquire a frame image set of a scanned object; each of frame images in the frame image set has a plurality of scanned marking points, and each scanned marking point corresponds to one marking point of the scanned object;
A generating module 302 is used to generate an initial frame of the scanned object according to the frame image set; where the initial frame includes a plurality of initial frame points, each initial frame point is determined based on the plurality of scanned marking points, and each initial frame point corresponds to one scanned marking point in the frame images;
A second acquisition module 303 is used to acquire a candidate frame point set for each initial frame point in the initial frame based on coordinate position information of each initial frame point;
An identification module 304 is used to identify a target frame point that meets a preset loop detection condition in the candidate frame point set of each initial frame point;
A link establishment module 305 is used to establish a link relationship between each initial frame point and a corresponding target frame point;
A processing module 306 is used to obtain a first target frame by performing a global optimization processing on the marking points of the initial frame based on the link relationship between the initial frame point and the corresponding target frame point.

Optionally, the first acquisition module 301 is further configured to:
Acquire a reference frame that is empty, acquire a first frame image from the frame image set, and determine frame points based on all scanned marking points corresponding to the first frame image and add the frame points to the reference frame;
Sequentially acquire a second frame image from the frame image set, and acquire a frame point to be processed that matches a scanned marking point of the second frame image from the reference frame;
Determine whether the scanned marking point of the second frame image and the frame point to be processed that is matched are the same marking point based on feature information of the scanned marking point;
When the scanned marking point of the second frame image and the frame point to be processed that is matched are the same marking point, update feature information of the frame point to be processed; and when the scanned marking point of the second frame image and the frame point to be processed that is matched are not the same marking point, determine the frame point based on the scanned marking point of the second frame image and add the frame point to the reference frame;
After determining the frame image set frame by frame, the initial frame is obtained.

Optionally, the generating module 302 is further configured to:
Determine a position coordinate value of each initial frame point based on the coordinate position information of each initial frame point;
Determine a candidate position range based on the position coordinate value and a preset radius distance;
Determine a candidate frame point set of each initial frame point by obtaining frame points within the candidate position range.

Optionally, the second acquisition module 303 is further configured to:
Determine whether each of the initial frame points and the candidate frame point in the candidate frame point set belong to a same frame image;
When each of the initial frame points and the candidate frame point do not belong to the same frame image, determine whether feature information of each of the initial frame points matches the feature information of each of the candidate frame points;
When the feature information of each of the initial frame points matches the feature information of the candidate frame point, determine the candidate frame point to be the target frame point.

Optionally, the processing module 306 is further configured to:
Obtain a updated position coordinate of the initial frame point by calculating a minimum distance between the scanned marking point in each frame image and the initial frame point in the initial frame, and a minimum distance between two initial frame points with the link relationship in the initial frame, based on a mapping relationship between the scanned marking point in each frame image and the initial frame point in the initial frame, coordinate position information and the link relationship of each initial frame point;
Update a position of the initial frame point based on the updated position coordinate to obtain the first target frame.

Optionally, the apparatus further comprises:
A third acquisition module, which is used to acquire a candidate target frame point corresponding to the first target frame point in the first target frame;
A determination module, which is used to determine, based on the frame point feature information, that the first target frame point and the candidate target frame point are a same frame point;
A determination processing module, which is used to determine a second target frame point based on the first target frame point and the candidate target frame point, and average all feature information corresponding to the same frame point as feature information of the second target frame point to obtain a second target frame.

Optionally, the apparatus further comprises:
A calculation module, which is configured to obtain an updated position coordinate of the second target frame point by calculating a minimum distance between the scanned marking point in each frame image and the second target frame point in the second target frame based on the mapping relationship between the scanned marking point in each frame image and the second target frame point in the second target frame, and coordinate position information of each second target frame point;
A fourth acquisition module, which is used to obtain a third target frame and parameter information corresponding to each frame image based on the updated position coordinates of the second target frame points.

The loop detection apparatus provided in the embodiments of the present disclosure can execute the loop detection method provided in any embodiment of the present disclosure, and has the corresponding functional modules and beneficial effects for executing the method.

The embodiments of the present disclosure further provide a computer program product, including a computer program/instruction, which implements the loop detection method provided by any embodiment of the present disclosure when the computer program/instruction is executed by a processor.

FIG. 4 is a schematic diagram of a structure of an electronic device provided in an embodiment of the present disclosure. Referring specifically to FIG. 4 below, it shows a schematic diagram of a structure of an electronic device 400 suitable for implementing the embodiment of the present disclosure. The electronic device 400 in the embodiment of the present disclosure may include, but is not limited to, a mobile terminal such as a mobile phone, a laptop computer, a digital broadcast receiver, a PDA (personal digital assistant), a PAD (tablet computer), a PMP (portable multimedia player), a vehicle-mounted terminal (such as a vehicle-mounted navigation terminal), etc., and a fixed terminal such as a digital TV, a desktop computer, etc. The electronic device shown in FIG. 4 is only an example and should not bring any limitation to the functions and scope of use of the embodiment of the present disclosure.

As shown in FIG. 4, the electronic device 400 may include a processing device (e.g., a central processing unit, a graphics processing unit, etc.) 401, which can perform various appropriate actions and processes according to a program stored in a read-only memory (ROM) 402 or a program loaded from a storage device 408 into a random access memory (RAM) 403. In the RAM 403, various programs and data required for the operation of the electronic device 400 are also stored. The processing device 401, the ROM 402, and the RAM 403 are connected to each other via a bus 404. An input/output (I/O) interface 405 is also connected to the bus 404.

Typically, following devices may be connected to the I/O interface 405: an input device 406 including, for example, a touch screen, a touchpad, a keyboard, a mouse, a camera, a microphone, an accelerometer, a gyroscope, etc.; an output device 407 including, for example, a liquid crystal display (LCD), a speaker, a vibrator, etc.; a storage device 408 including, for example, a magnetic tape, a hard disk, etc.; and a communication devices 409. The communication device 409 may allow the electronic device 400 to communicate wirelessly or wired with other devices to exchange data. Although FIG. 4 shows an electronic device 400 with various devices, it should be understood that it is not required to implement or have all the devices shown. More or fewer devices may be implemented or have alternatively.

In particular, according to one embodiment of the present disclosure, the process described above with reference to the flowchart can be implemented as a computer software program. For example, an embodiment of the present disclosure includes a computer program product, which includes a computer program carried on a non-transitory computer-readable medium, and the computer program includes program code for executing the method shown in the flowchart. In such an embodiment, the computer program can be downloaded and installed from a network through the communication device 409, or installed from the storage device 408, or installed from the ROM 402. When the computer program is executed by the processing device 401, the above-mentioned functions defined in the loop detection method of the embodiment of the present disclosure are executed.

It should be noted that the computer-readable medium mentioned above in the present disclosure may be a computer-readable signal medium or a computer-readable storage medium or any combination of the above two. The computer-readable storage medium may be, for example, but not limited to, an electrical, magnetic, optical, electromagnetic, infrared, or a semiconductor system, an apparatus or a device, or any combination of the above. More specific examples of computer-readable storage media may include, but are not limited to, an electrical connection with one or more wires, a portable computer disk, a hard disk, a random access memory (RAM), a read-only memory ( ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that may be used by or in combination with an instruction execution system, an apparatus or a device. In the present disclosure, a computer-readable signal medium may include a data signal propagated in a baseband or as part of a carrier wave, which carries a computer-readable program code. This propagated data signal may take a variety of forms, including but not limited to electromagnetic signal, optical signal, or any suitable combination of the above. Computer readable signal media may also be any computer readable medium other than computer readable storage media, which may send, propagate or transmit a program for use by or in conjunction with an instruction execution system, an apparatus or a device. The program code contained on the computer readable medium may be transmitted using any appropriate medium, including but not limited to, a wire, an optical cable, RF (radio frequency), etc., or any suitable combination of the above.

In some embodiments, the client and server may communicate using any currently known or future developed network protocol such as HTTP (Hyper Text Transfer Protocol), and may be interconnected with any form or medium of digital data communication (e.g., a communication network). Examples of communication networks include a local area network (LAN), a wide area network (WAN), an internet, and a peer-to-peer network (e.g., an ad hoc peer-to-peer network), as well as any currently known or future developed network.

The computer-readable medium may be included in the electronic device or may exist independently without being incorporated into the electronic device.

The above-mentioned computer-readable medium carries one or more programs. When the above-mentioned one or more programs are executed by the electronic device, the electronic device: receives an information display trigger operation from a user during playing a video; obtains at least two target information associated with the video; displays a first target information among the at least two target information in an information display area on a playback page of the video, wherein a size of the information display area is smaller than a size of the playback page; receives a first switching trigger operation from the user, and switches the first target information displayed in the information display area to a second target information among the at least two target information.

For performing operations of the present disclosure may be written in one or more programming languages or a combination thereof, including, but not limited to, an object-oriented programming language, such as Java, Smalltalk, C++, and a conventional procedural programming language, such as "C" or similar programming language. The program code may be executed entirely on a computer of a user, partially on the computer of the user, as a separate software package, partially on the computer of the user and partially on a remote computer, or entirely on a remote computer or a server. In cases involving a remote computer, the remote computer may be connected to the computer of the user through any type of network, including a local area network (LAN) or a wide area network (WAN), or may be connected to an external computer (e.g., via the Internet using an Internet service provider).

The flowchart and schematic diagram in the accompanying drawings illustrate the possible architecture, function and operation of the system, method and computer program product according to various embodiments of the present disclosure. In this regard, each square box in the flowchart or schematic diagram may represent a module, a program segment or a part of a code, and the module, the program segment or the part of the code includes one or more executable instructions for realizing the specified logical function. It should also be noted that in some implementations as replacements, the functions marked in the square box may also occur in a sequence different from that marked in the accompanying drawings. For example, two square boxes represented in succession may actually be executed substantially in parallel, and they may sometimes be executed in the opposite order, depending on the functions involved. It should also be noted that each square box in the block diagram and/or flow chart, and the combination of the square boxes in the block diagram and/or flow chart may be implemented with a dedicated hardware-based system that performs a specified function or operation, or may be implemented with a combination of dedicated hardware and computer instructions.

The unit involved in the embodiments described in the present disclosure may be implemented by software or hardware, where the name of the unit does not, in some cases, constitute a limitation on the unit itself.

The functions described above herein may be performed at least in part by one or more hardware logic components. For example, exemplary types of hardware logic components that may be used include, without limitation, a field programmable gate array (FPGAs), an application specific integrated circuit (ASIC), an application specific standard product (ASSP), a system on chip (SOC), a complex programmable logic device(CPLD), and the like.

In the context of the present disclosure, a machine-readable medium may be a tangible medium that may contain or store a program for use by or in conjunction with an instruction execution system, a device, or an equipment. A machine-readable medium may be a machine-readable signal medium or a machine-readable storage medium. A machine-readable medium may include, but is not limited to, an electronic, magnetic, optical, electromagnetic, infrared, or a semiconductor system, an apparatus, or a device, or any suitable combination of the foregoing. A more specific example of a machine-readable storage medium may include an electrical connection based on one or more lines, a portable computer disk, a hard disk, a random access memory(RAM), a read-only memory (ROM), an erasable programmable read-only memory (EPROM) or a flash memory, an optical fiber, a portable compact disk read-only memory (CD-ROM), an optical storage device, a magnetic storage device, or any suitable combination of the foregoing.

According to one or more embodiments of the present disclosure, the present disclosure provides an electronic device, including:
A processor;
A storage device for storing instructions executable by the processor;
The processor is used to read the executable instructions from the storage device and execute the instructions to implement any loop detection method provided in the present disclosure.

According to one or more embodiments of the present disclosure, the present disclosure provides a computer-readable storage medium, wherein the storage medium stores a computer program, and the computer program is used to execute any loop detection method provided by the present disclosure.

It should be noted that, in the present disclosure, relational terms such as "first" and "second" are only used to distinguish one entity or operation from another entity or operation, and do not necessarily require or imply any such actual relationship or order between these entities or operations. Moreover, the terms "include", "comprise" or any other variants thereof are intended to cover non-exclusive inclusion, so that a process, a method, an article or a device including a series of elements includes not only those elements, but also other elements not explicitly listed, or also includes elements inherent to such process, method, article or device. **In** the absence of further restrictions, the elements defined by the sentence "include a ..." do not exclude the existence of other identical elements in the process, method, article or device including the elements.

The above description is only a specific embodiment of the present disclosure, so that those skilled in the art may understand or implement the present disclosure. Various modifications to the embodiment will be apparent to those skilled in the art, and the general principles defined herein may be implemented in other embodiment without departing from the spirit or scope of the present disclosure. Therefore, the present disclosure will not be limited to the embodiment shown herein but will conform to the widest scope consistent with the principles and novel features disclosed herein.

### Industrial Applicability

The present invention can handle the loop detection in any scanning scenario, ensure the loop detection effect, improve the accuracy and reliability of the loop detection, and further improve the detection efficiency and effect under the loop detection, so that the final 3D reconstructed model is more accurate and reliable, and has strong industrial practicality.

## Claims

1. A loop detection method, **characterized in that**, comprises:
acquiring a frame image set of a scanned object; each of frame images in the frame image set having a plurality of scanned marking points, and each of the plurality of scanned marking points corresponding to one marking point of the scanned object;
generating an initial frame of the scanned object according to the frame image set; wherein the initial frame comprises a plurality of initial frame points, each of the plurality of initial frame points is determined based on the plurality of scanned marking points, and each initial frame point corresponds to one scanned marking point in the frame images;
acquiring a candidate frame point set for each initial frame point in the initial frame based on coordinate position information of each initial frame point;
identifying a target frame point that meets a preset loop detection condition in the candidate frame point set of each initial frame point, and establishing a link relationship between each initial frame point and a corresponding target frame point; and
obtaining a first target frame by performing a global optimization processing on the marking points of the initial frame based on the link relationship between the initial frame point and the corresponding target frame point.

2. The loop detection method according to claim 1, wherein generating the initial frame of the scanned object according to the frame image set comprises:
acquiring a reference frame that is empty, acquiring a first frame image from the frame image set, and determining frame points based on all scanned marking points corresponding to the first frame image and adding the frame points to the reference frame;
sequentially acquiring a second frame image from the frame image set, and acquiring a frame point to be processed that matches a scanned marking point of the second frame image from the reference frame;
determining whether the scanned marking point of the second frame image and the frame point to be processed that is matched are the same marking point based on feature information of the scanned marking point;
updating feature information of the frame point to be processed in response that the scanned marking point of the second frame image and the frame point to be processed that is matched are the same marking point; and determining the frame point based on the scanned marking point of the second frame image and add the frame point to the reference frame in response that the scanned marking point of the second frame image and the frame point to be processed that is matched are not the same marking point;
obtaining the initial frame after the frame image set has been determined frame by frame.

3. The loop detection method according to any one of claims 1 to 2, wherein acquiring the candidate frame point set for each initial frame point in the initial frame based on coordinate position information of each initial frame point comprises:
determining a position coordinate value of each initial frame point based on the coordinate position information of each initial frame point;
determining a candidate position range based on the position coordinate value and a preset radius distance;
determining a candidate frame point set of each initial frame point by obtaining frame points within the candidate position range.

4. The loop detection method according to any one of claims 1 to 3, wherein identifying the target frame point that meets the preset loop detection condition in the candidate frame point set of each initial frame point comprises:
determining whether each of the initial frame points and the candidate frame point in the candidate frame point set belong to a same frame image;
determining whether feature information of each of the initial frame points matches feature information of each of the candidate frame points, in response that each of the initial frame points and the candidate frame point do not belong to the same frame image;
determining the candidate frame point to be the target frame point, in response that the feature information of each of the initial frame points matches the feature information of the candidate frame point.

5. The loop detection method according to any one of claims 1 to 4, wherein obtaining the first target frame by performing the global optimization processing on the marking points of the initial frame based on the link relationship between the initial frame point and the corresponding target frame point comprises:
obtaining a updated position coordinate of the initial frame point by calculating a minimum distance between the scanned marking point in each frame image and the initial frame point in the initial frame, and a minimum distance between two initial frame points with the link relationship in the initial frame, based on a mapping relationship between the scanned marking point in each frame image and the initial frame point in the initial frame, coordinate position information and the link relationship of each initial frame point;
obtaining the first target frame by updating a position of the initial frame point based on the updated position coordinate.

6. The loop detection method according to any one of claims 1 to 5, further comprising:
obtaining a candidate target frame point corresponding to the first target frame point in the first target frame;
determining, based on the frame point feature information, that the first target frame point and the candidate target frame point are a same frame point;
determining a second target frame point based on the first target frame point and the candidate target frame point, and obtaining a second target frame by averaging all feature information corresponding to the same frame point as feature information of the second target frame point.

7. The loop detection method according to claim 6, further comprising:
obtaining an updated position coordinate of the second target frame point by calculating a minimum distance between the scanned marking point in each frame image and the second target frame point in the second target frame based on the mapping relationship between the scanned marking point in each frame image and the second target frame point in the second target frame, and coordinate position information of each second target frame point;
obtaining a third target frame and parameter information corresponding to each frame image based on the updated position coordinates of the second target frame points.

8. A loop detection apparatus, **characterized in that**, comprises:
a first acquisition module, being configured to acquire a frame image set of a scanned object; each of frame images in the frame image set having a plurality of scanned marking points, and each of the plurality of scanned marking points corresponding to one marking point of the scanned object;
a generating module, being configured to generate an initial frame of the scanned object according to the frame image set; wherein the initial frame comprises a plurality of initial frame points, each of the plurality of initial frame points is determined based on the plurality of scanned marking points, and each initial frame point corresponds to one scanned marking point in the frame images;
a second acquisition module, being configured to acquire a candidate frame point set for each initial frame point in the initial frame based on coordinate position information of each initial frame point;
an identification module, being configured to identify a target frame point that meets a preset loop detection condition in the candidate frame point set of each initial frame point;
a link establishment module, being configured to establish a link relationship between each initial frame point and a corresponding target frame point; and
a processing module, being configured to obtain a first target frame by performing a global optimization processing on the marking points of the initial frame based on the link relationship between the initial frame point and the corresponding target frame point.

9. An electronic device, **characterized in that**, comprises:
a processor;
a storage device for storing instructions executable by the processor;
the processor is configured to read the instructions from the storage device and execute the instructions to implement the loop detection method described in any one of claims 1 to 7.

10. A computer-readable storage medium, **characterized in that**, the storage medium stores a computer program, and the computer program is used to execute the loop detection method described in any one of claims 1 to 7.
